(19) **Europäisches Patentamt**

**European Patent Office**

**Office européen des brevets**

(11) **EP 1 393 434 B1**

(12) **EUROPEAN PATENT SPECIFICATION**

(45) Date of publication and mention
of the grant of the patent:
**24.08.2005 Bulletin 2005/34**

(21) Application number: **02724345.0**

(22) Date of filing: **16.05.2002**

(51) Int Cl.⁷: **H02P 6/18**

(86) International application number:
**PCT/FI2002/000420**

(87) International publication number:
**WO 2002/093729 (21.11.2002 Gazette 2002/47)**

(54) **A METHOD ASSOCIATED WITH CONTROLLING A SYNCHRONOUS MACHINE**

DER STEUERUNG EINER SYNCHRONEN MASCHINE ZUGEORDNETES VERFAHREN

PROCEDE ASSOCIE A LA REGULATION D'UNE MACHINE SYNCHRONE

(84) Designated Contracting States:
**AT BE CH CY DE DK ES FI FR GB GR IE IT LI LU
MC NL PT SE TR**

(30) Priority: **17.05.2001 FI 20011050**

(43) Date of publication of application:
**03.03.2004 Bulletin 2004/10**

(73) Proprietor: **ABB Oy
00380 Helsinki (FI)**

(72) Inventor: **VIRTANEN, Reijo
FIN-01600 Vantaa (FI)**

(74) Representative:
**Valkeiskangas, Tapio Lassi Paavali
Kolster Oy AB**, Iso Roobertinkatu 23, P.O. Box
148
00121 Helsinki (FI)

(56) References cited:
**EP-A2- 0 784 378        WO-A1-99/65137
US-A- 5 144 564         US-B1- 6 172 498**

# EP 1 393 434 B1

**Description**

BACKGROUND OF THE INVENTION

The invention relates to a method for a position angle sensorless and rotational speed sensorless control of a synchronous machine, the method comprising the steps of determining phase currents of a stator in the synchronous machine, determining phase voltages of a stator in the synchronous machine and estimating a position angle of a rotor in the synchronous machine.

Synchronous machines are generally used as motors in the applications thereof, where extensive power is required as well as reliable behaviour at a broad speed range. High-powered synchronous motors are controlled in a controlled manner using cycloconverters or other types of frequency converters, which provide the stator of the synchronous motor with the desired voltage.

In order to control a synchronous machine reliably, the rotor position angle of the synchronous machine should be known as accurately as possible. The position angle is previously typically defined using an apparatus intended to determine the position angle, such as a resolver or a pulse sensor. However, a position angle sensor is a mechanical component that wears when used and that should be mounted and wired appropriately. As regards the use, the position angle sensor is a critical object, since the motor operation becomes unusable if the resolver or pulse sensor belonging thereto is broken or damaged.

Document WO-A1-9365137 discloses a method, in which the measured rotor position angle is corrected. This correction is done by calculating a correction term and adding it to the measured angle.

The rotor position angle of the synchronous motor can also be determined without a position angle sensor. The determination can be based on a motor model composed of the differential equations of the synchronous machine. Such a motor model obtains as starting information the measurement data concerning the stator currents fed into the motor stator and the rotor magnetization current. In addition, the model requires motor parameters in order to function, such as values of motor resistances and inductances. The motor model is also frequently used for controlling the machine. If the rotor position angle obtained from the motor model is not the correct one, errors are also caused to the flux estimates calculated from the flux equations and used for controlling and adjusting the machine. Owing to the erroneously calculated flux values, the machine cannot be optimally controlled.

When no sensors are used, the errors the motor model causes become a problem. Due to the errors the operation of the motor model does not correspond with the situation in an actual motor. The motor model fluxes in particular do not correspond with the actual motor fluxes owing to the saturation of the actual inductances and the other possibly inaccurate parameter values used in the model. This causes the midpoint of the vector quantities to shift from the actual midpoint thereof and also an erroneous rotor position angle of the model in relation to the actual rotor position angle.

BRIEF DESCRIPTION OF THE INVENTION

It is an object of the invention to provide a method that avoids the problems mentioned above and enables to control the synchronous machine more reliably than before using the same measurements of the electric quantities as previously. This object is achieved with the method of the invention, characterized in that the method also comprises the steps of generating estimates for stator flux vector components in the synchronous machine of the determined phase currents of the stator in the synchronous machine and the estimated rotor angle using a current model of the synchronous machine, generating estimates for the stator flux vector components in the synchronous machine of the determined phase voltages, comparing the generated stator flux vector estimates in order to achieve a quantity proportional to the phase difference of the estimates, and adjusting the estimate of the rotor position angle on the basis of the quantity proportional to the phase difference.

The invention is based on the idea that determining the stator fluxes of the synchronous machine using different starting information allow comparing said fluxes and thus to obtain a phase-locked system, which is able to find the rotor position angle of the synchronous machine and provides the control with the correct value of the terminal angle.

An advantage with the method of the invention is to achieve the reliability of the quantities describing the electric state of the synchronous machine, whereby the adjustment and control of the machine can reliably be based on the flux values. In addition, the method allows controlling the synchronous machine reliably without a mechanical sensor of the rotational speed.

BRIEF DESCRIPTION OF THE DRAWINGS

In the following, the method will be described in greater detail by means of the preferred embodiments with reference to the accompanying drawings, in which

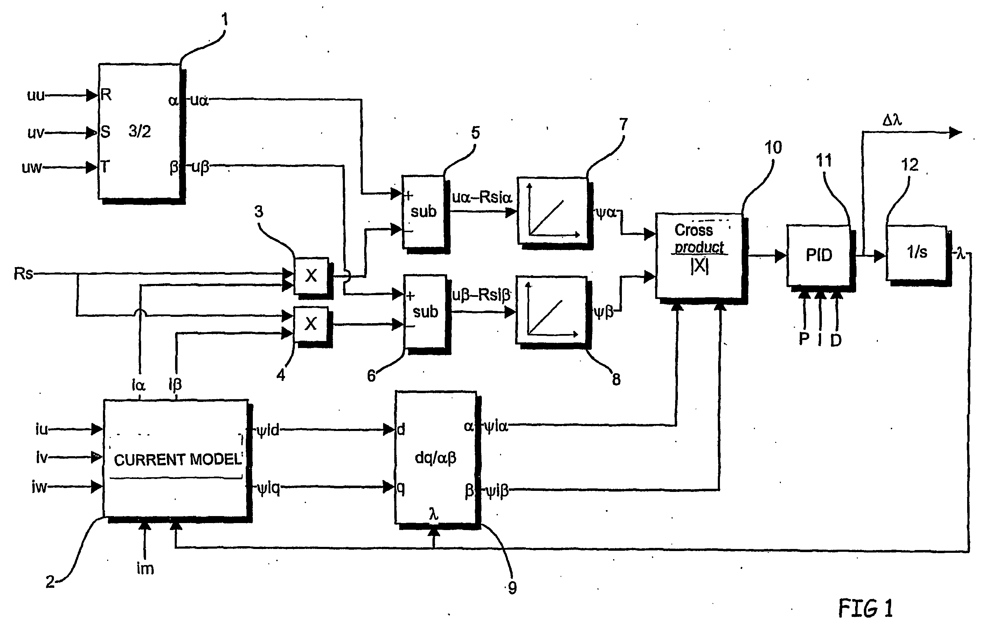

Figure 1 is a block diagram showing a method of the invention.

DETAILED DESCRIPTION OF THE INVENTION

Figure 1 is a block diagram showing a method of the invention. A synchronous machine is controlled using a control device, such as a cycloconverter or a frequency converter, including power switches. The power switches in the control device provide voltage or current in accordance with the control method to the terminals of the machine stator in order to appropriately control the machine. In accordance with the invention the quantities of the stator currents are measured. Typically synchronous machines comprise a three-phase winding without a neutral conductor, whereby measuring the current of two phases is enough to determine the currents of all three phases.

Furthermore, the voltages fed into the machine stator are determined. The determination of the voltages can be implemented in connection with the control device or by measuring the voltage directly from the terminals of the synchronous machine stator. The measurement data concerning the currents and the voltages is typically required irrespective of how the synchronous machine is controlled or adjusted.

The determined stator voltages $u_u$, $u_v$, $u_w$ are converted (1) into component form, whereby the three-phase stator voltage can be presented as a combination of two components $u_\alpha$, $u_\beta$. Converting an electric quantity such as a voltage into component form signifies in practice that a space vector is formed of the quantity and that rectangular components of the space vector are separated from one another. In other words, for instance the two-axis model components $b_\alpha$ and $b_\beta$ of the space vector quantity $\underline{b}$ can be determined so that component $\alpha$ is the real part of vector $\underline{b}$ and component $\beta$ is correspondingly the imaginary part of vector $\underline{b}$. Similarly the space vector can be constructed from the two-axis model component $\underline{b} = b_\alpha + jb_\beta$.

To convert the phase voltages from phase quantities into the two-axis model components $\alpha$ and $\beta$ can be carried out using the formula shown in matrix form

$$\begin{bmatrix} u_\alpha \\ u_\beta \\ u_0 \end{bmatrix} = \frac{2}{3} \begin{bmatrix} 1 & -\dfrac{1}{2} & -\dfrac{1}{2} \\ 0 & \dfrac{\sqrt{3}}{2} & -\dfrac{\sqrt{3}}{2} \\ \dfrac{1}{2} & \dfrac{1}{2} & \dfrac{1}{2} \end{bmatrix} \begin{bmatrix} u_u \\ u_v \\ u_w \end{bmatrix}. \tag{1}$$

The formula (1) also perceives the possible zero component $u_0$ of the voltage, which is nevertheless not required in the method.

The measurement data concerning the stator currents is fed as shown in Figure 1 to a current model 2 formed of the synchronous machine. The current model provides as outputs thereof stator currents $i_\alpha$ and $i_\beta$ converted into two-component form. Converting the stator currents into two-component form occurs in a similar way as described above in connection with stator voltages. The voltage and current components $\alpha$ and $\beta$ shown above are presented in stator co-ordinates.

Since a stator resistance $R_s$ is known from the parameters of the synchronous machine, the effect of the resistive losses can be reduced from the determined stator voltages. The size of the resistive losses can simply be calculated by multiplying the stator current quantities by the stator resistance $R_s$. These multiplications are carried out in multiplication blocks 3 and 4 in Figure 1.

Since the stator currents are converted into the same co-ordinates as the stator voltages, the resistive losses caused by the currents can be reduced from the stator voltages. Such a reduction occurs in the embodiment shown in Figure 1 in subtraction blocks 5 and 6. As a result of the subtraction the value of the voltage is obtained that provides stator flux to the stator.

The stator flux components provided by the voltage are calculated in accordance with the invention by integrating 7, 8 previously calculated voltages. As is known in the art, the integral expression of the voltage forms a flux, whereby the output of blocks 7 and 8 implements the expression

$$\psi_{\alpha,\beta} = \int \left( u_{\alpha,\beta} - R_s i_{\alpha,\beta} \right) dt. \tag{2}$$

In block 7 in Figure 1 the stator flux $\alpha$ component $\psi_\alpha$ and correspondingly in block 8 the stator flux $\beta$ component $\psi_\beta$ are calculated. As mentioned above, a space vector can easily be formed of said quantity from the quantities in component form.

The size of the stator flux calculated as shown above is correct, but as is known in the art it becomes inaccurate for instance because the midpoint of the flux shifts or owing to an error occurring on the integral for computational reasons. Since the flux is used as is known in the art for controlling the machine, the flux value should be corrected to be as accurate as possible in order to ensure a reliable control. In order to correct the midpoint of the flux, the restriction of the amplitude of the voltage integral or another method can for instance be employed with cycloconverters.

As mentioned previously, a current model 2 on the synchronous machine is prepared. The current model allows determining the electric state of the synchronous machine as accurately as possible using the determined current values as starting information. The model prepared on the synchronous machine includes parameter values of the inductances and resistances of the machine. The model is drawn up to describe the state of the synchronous machine in static and dynamic states. Several inductance values of the synchronous machine strongly depend on the rotor angle $\lambda$ in relation to the stator, whereby the current model prepared on the machine requires the information about the rotor's position angle.

The measurement data concerning the stator currents are conveyed into the current model in accordance with the invention and the estimates of the machine's stator fluxes $\psi_{id}$ and $\psi_{iq}$ are obtained as the current model outputs. Figure 1 shows how the flux values to be obtained from the current model are presented in synchronous dq co-ordinates, i.e. a co-ordinate system that rotates attached to the rotor of the synchronous machine. In such a case the flux estimates are equal quantities, and are therefore simple to use for instance for controlling the machine.

As shown in Figure 1, the flux estimates $\psi_{id}$ and $\psi_{iq}$ shown in the dq co-ordinates are converted into the stator co-ordinates using a conversion block 9. In order to convert the co-ordinates, information or an estimate concerning the angle between the co-ordinates is required, or in this case the rotor position $\lambda$ in relation to the stator. Even though the conversion block 9 of the co-ordinates is shown as a block separated from the current model 2, the conversion can be carried out as included in the current model, since the current model obtains the same value or estimate from the position angle between the stator and the rotor. The stator flux estimates $\psi_{i\alpha}$, $\psi_{i\beta}$ drawn up from the current model are obtained as outputs of the co-ordinates of the conversion block 9.

After the conversion 9 of the co-ordinates is carried out, the stator flux $\psi_\alpha$, $\psi_\beta$ calculated on the basis of the voltage integral and the stator flux $\psi_{i\alpha}$, $\psi_{i\beta}$ obtained on the basis of the current model are in the same co-ordinates, wherefore these fluxes should correspond to one another. Fluxes determined in accordance with the invention and particularly the phases thereof are compared with one another. Calculating the cross product between the fluxes preferably compares the phases. The stator fluxes shown in vector form are the following: $\underline{\psi}_s = \psi_\alpha + j\psi_\beta$ and $\underline{\psi}_{si} = \psi_{i\alpha} + j\psi_{i\beta}$, whereby the expression of the cross product is simply $\underline{\psi}_s \times \underline{\psi}_{si} = \psi_\alpha\psi_{i\beta} - \psi_\beta\psi_{i\alpha}$. The cross product between two vectors describes the angle difference between the vectors, or in this case the phase difference of stator flux vectors calculated in different ways. If the result of the cross product operation is zero, the vectors are precisely parallel, which is the desired result.

The result of the cross product between the stator fluxes is fed in accordance with the invention into the input of a controller 11. The controller 11 is typically a normal PID controller, whose parameter values can be determined appropriately.

The output of the controller 11 is integrated using an integrator 12, whereby the integrator output $\lambda$ is used as an estimate for the rotor position angle. The estimate concerned is fed into the current model 2 and the conversion element 9 of the co-ordinates as shown in Figure 1 in accordance with the invention. The output of the controller 11 affects the output of the cross product element 10 through the current model 2 and the conversion element 9, and tends to zero said output, in which case the stator fluxes calculated on the basis of the current model and the voltage integral are co-phasal.

Since the position angle is the integral of the angular speed, an estimate is obtained from the output of the controller 11 for the rotor's angular speed $\Delta\lambda$. The angular speed can be utilized for instance for control purposes in other connections.

A system like the one described implements the phase-locked system using the provided cross product, the controller and the angle estimate $\lambda$ to be used for feedback. The size of the flux obtained using the voltage integral is precisely accurate, but the exact direction of the rotor axis is not known until the rotor angle is estimated in the method of the invention and the synchronous machine can be controlled reliably for example on the basis of the fluxes.

It should be noted that the above description describes the implementation and operation of the method on the basis of quantities in component form for the sake of simplicity. However, it is apparent that the component form is one way to present the vector quantity and therefore the invention is fully realizable even by means of directly vector formed quantities.

It is obvious for those skilled in the art that as technology advances the basic idea of the invention can be implemented in various ways. The invention and the embodiments thereof are therefore not restricted to the above examples but can be modified within the scope of the claims.

**Claims**

1. A method for a position angle sensorless and a rotational speed sensorless control of a synchronous machine, the method comprising the steps of

determining phase currents ($i_u$, $i_v$, $i_w$) of a stator in the synchronous machine,

determining phase voltages ($u_u$, $u_v$, $u_w$) of a stator in the synchronous machine, and

estimating a position angle ($\lambda$) of a rotor in the synchronous machine, **characterized in that** the method also comprises the steps of

generating estimates for stator flux vector components ($\psi_{i\alpha}$, $\psi_{i\beta}$) in the synchronous machine from the determined phase currents ($i_u$, $i_v$, $i_w$) of the stator in the synchronous machine and the estimated rotor angle ($\lambda$) using a current model (2) of the synchronous machine,

generating estimates for the stator flux vector components ($\psi_\alpha$, $\psi_\beta$) in the synchronous machine from the determined phase voltages ($u_u$, $u_v$, $u_w$),

comparing the generated stator flux vector estimates ($\psi_{i\alpha}$, $\psi_{i\beta}$; $\psi_\alpha$, $\psi_\beta$) in order to achieve a quantity proportional to the phase difference of the estimates, and

adjusting the estimate ($\lambda$) of the rotor position angle on the basis of the quantity proportional to the phase difference.

2. A method as claimed in claim 1, **characterized in that** the comparison of the generated stator flux vector estimates ($\psi_{i\alpha}$, $\psi_{i\beta}$; $\psi_\alpha$, $\psi_\beta$) comprises a step, in which a cross product between said estimates is formed in order to achieve a quantity proportional to the phase difference of the estimates.

3. A method as claimed in claim 1 or 2, **characterized in that** the generation of the stator flux vector component estimates ($\psi_\alpha$, $\psi_\beta$) comprises a step, in which the estimates ($\psi_\alpha$, $\psi_\beta$) are generated of the determined phase voltages ($u_u$, $u_v$, $u_w$) using integration.

4. A method as claimed in claim 1, 2 or 3, **characterized in that** the generation of the stator flux vector component estimates ($\psi_\alpha$, $\psi_\beta$) of the determined phase voltages ($u_u$, $u_v$, $u_w$) comprises a step, in which the resistive losses of the stator are reduced from the determined phase voltages before generating the estimates.

5. A method as claimed in any one of preceding claims 1 to 4, **characterized in that** the method further comprises the steps of

conducting a proportional quantity to the phase difference of the stator flux vector estimates to the PID controller in order to obtain an estimate ($\Delta\lambda$) of the position angle change, and

integrating the position angle change estimate ($\Delta\lambda$) in order to obtain an estimate ($\lambda$) of the rotor position angle.

**Patentansprüche**

1. Verfahren für eine sensorlose Positionswinkelsteuerung und eine sensorlose Drehzahlsteuerung einer Synchronmaschine, wobei das Verfahren die Schritte umfasst:

das Bestimmen der Phasenströme ($i_u$, $i_v$, $i_w$) eines Stators in der Synchronmaschine,

das Bestimmen der Phasenspannungen ($u_u$, $u_v$, $u_w$) eines Stators in der Synchronmaschine,

das Schätzen eines Positionswinkels ($\lambda$) eines Rotors in der Synchronmaschine,

**dadurch gekennzeichnet, dass** das Verfahren außerdem die Schritte umfasst:

das Generieren von Schätzungen für Statorflussvektorkomponenten ($\psi_{i\alpha}$, $\psi_{i\beta}$) in der Synchronmaschine aus den bestimmten Phasenströmen ($i_u$, $i_v$, $i_w$) des Stators in der Synchronmaschine und dem geschätzten Rotorwinkel ($\lambda$) unter Verwendung eines Strommodels (2) der Synchronmaschine,

das Generieren von Schätzungen für die Statorflussvektorkomponenten ($\psi_\alpha$, $\psi_\beta$) in der Synchronmaschine aus den bestimmten Phasenspannungen ($u_u$, $u_v$, $u_w$),

das Vergleichen der generierten Statorflussvektorschätzungen ($\psi_{i\alpha}$, $\psi_{i\beta}$; $\psi_\alpha$, $\psi_\beta$), um eine Größe zu erhalten, die proportional zur Phasendifferenz der Schätzungen ist, und
das Anpassen der Schätzung ($\lambda$) des Rotorpositionswinkels auf der Basis der zur Phasendifferenz proportionalen Größe.

**2.** Verfahren nach Anspruch 1,
**dadurch gekennzeichnet, dass** der Vergleich der generierten Statorflussvektorschätzungen ($\psi_{i\alpha}$, $\psi_{i\beta}$; $\psi_{\alpha}$, $\psi_{\beta}$) einen Schritt umfasst, in dem ein Vektorprodukt der Schätzungen gebildet wird, um eine Größe zu erhalten, die proportional zur Phasendifferenz der Schätzungen ist.

**3.** Verfahren nach Anspruch 1 oder 2,
**dadurch gekennzeichnet, dass** die Generierung der Statorflussvektorkomponentenschätzungen ($\psi_{\alpha}$, $\psi_{\beta}$) einen Schritt umfasst, in dem die Schätzungen ($\psi_{\alpha}$, $\psi_{\beta}$) unter Verwendung von Integration aus den bestimmten Phasenspannungen ($u_u$, $u_v$, $u_w$) generiert werden.

**4.** Verfahren nach einem der Ansprüche 1, 2 oder 3,
**dadurch gekennzeichnet, dass** die Generierung der Statorflussvektorkomponentenschätzungen ($\psi_{\alpha}$, $\psi_{\beta}$) der bestimmten Phasenspannungen ($u_u$, $u_v$, $u_w$) einen Schritt umfasst, in dem die ohmschen Verluste des Stators vor dem Generieren der Schätzungen aus den bestimmten Phasenspannungen verringert werden.

**5.** Verfahren nach einem der vorhergehenden Ansprüche 1 bis 4,
**dadurch gekennzeichnet, dass** das Verfahren ferner die Schritte umfasst:

Leiten einer zur Phasendifferenz der Statorflussvektorschätzungen proportionalen Größe zur PID-Steuereinheit, um eine Schätzung ($\Delta\lambda$) der Positionswinkeländerung zu erhalten, und
Integrieren der Positionswinkeländerungsschätzung ($\Delta\lambda$), um eine Schätzung ($\lambda$) des Rotorpositionswinkels zu erhalten.

## Revendications

**1.** Procédé de régulation de l'angle de position et de la vitesse de rotation d'une machine synchrone, sans capteurs, le procédé comprenant les étapes consistant à :

déterminer des courants de phase ($i_u$, $i_v$, $i_w$) d'un stator dans la machine synchrone ;
déterminer des tensions de phase ($u_u$, $u_v$, $u_w$) d'un stator dans la machine synchrone ; et
estimer un angle de position ($\lambda$) d'un rotor dans la machine synchrone, **caractérisé en ce que** procédé comprend également les étapes consistant à :

générer des estimations pour des composantes de vecteur de flux ($\Psi_{i\alpha}$, $\Psi_{i\beta}$) du stator dans la machine synchrone à partir des courants de phase ($i_u$, $i_v$, $i_w$) déterminés du stator dans la machine synchrone et de l'angle du rotor estimé ($\lambda$) en utilisant un modèle de courant (2) de la machine synchrone ;
générer des estimations pour les composantes de vecteur de flux ($\Psi_{\alpha}$, $\Psi_{\beta}$) du stator dans la machine synchrone à partir des tensions de phase ($u_u$, $u_v$, $u_w$) déterminées ;
comparer les estimations de vecteur de flux de stator produites ($\Psi_{i\alpha}$, $\Psi_{i\beta}$ ; $\Psi_{\alpha}$, $\Psi_{\beta}$) afin d'atteindre une quantité proportionnelle à la différence de phase de l'estimation ; et
ajuster l'estimation ($\lambda$) de l'angle de position du rotor sur la base de la quantité proportionnelle à la différence de phase.

**2.** Procédé selon la revendication 1, **caractérisé en ce que** la comparaison des estimations de vecteur de flux de stator produites ($\Psi_{i\alpha}$, $\Psi_{i\beta}$ ; $\Psi_{\alpha}$, $\Psi_{\beta}$) comprend une étape, dans laquelle un produit vectoriel entre lesdites estimations est crée afin d'atteindre une quantité proportionnelle à la différence de phase des estimations.

**3.** Procédé selon la revendication 1 ou 2, **caractérisé en ce que** la génération des estimations pour les composantes de vecteur de flux ($\Psi_{\alpha}$, $\Psi_{\beta}$) du stator comprend une étape, dans laquelle les estimations ($\Psi_{\alpha}$, $\Psi_{\beta}$) sont produites sur la base des tensions de phase déterminées ($u_u$, $u_v$, $u_w$) en utilisant l'intégration.

**4.** Procédé selon la revendication 1, 2 ou 3, **caractérisé en ce que** la génération des estimations pour les composantes de vecteur de flux ($\Psi_{\alpha}$, $\Psi_{\beta}$) du stator sur la base des tensions de phase déterminées ($u_u$, $u_v$, $u_w$) comprend

une étape, dans laquelle les pertes de résistance du stator sont réduites par rapport aux tensions de phase déterminées avant la génération des estimations.

5. Procédé selon l'une quelconque des revendications précédentes 1 à 4, **caractérisé en ce que** le procédé comprend en outre les étapes consistant à :

diriger une quantité proportionnelle à la différence de phase des estimations pour les composantes de vecteur de flux du stator vers le dispositif de commande PID afin d'obtenir une estimation ($\Delta\lambda$) du changement de l'angle de position ; et
intégrer l'estimation du changement de l'angle de position ($\Delta\lambda$) afin d'obtenir une estimation ($\lambda$) de l'angle de position du rotor.

FIG 1

EP 1 393 434 B1